# EUROPEAN PATENT APPLICATION

(11) **EP 3 170 582 A1**
(43) Date of publication of application: **24.05.2017**
(21) Application number: 16002450.1
(22) Date of filing: 17.11.2016
(51) Int. Cl.: B22D 18/02, B22D 18/04, B22D 18/08, B22D 17/20, B22D 17/22, B22D 27/11

(54) **METHOD AND APPARATUS FOR MOLDING OBJECTS MADE OF ALUMINUM, ALUMINUM ALLOYS, LIGHT ALLOYS, BRASS AND THE LIKE**

(30) Priority: 19.11.2015 IT UB20150573
(71) Applicant: IDRA S.R.L., 25039 Travagliato BS (IT)
(72) Inventor: Boni, Roberto, 25128 Brescia (IT); Ferri, Ruggero, 25038 Rovato BS (IT)
(74) Representative: Forattini, Amelia

(57) **Abstract**

A method for molding objects made of aluminum, aluminum alloys, light alloys, brass and the like, includes the steps of: starting from a molding apparatus which includes a lower platen adapted to support a lower mold part connected to a duct for feeding liquid metal, an upper platen at which an upper mold part is arranged, a compaction plug arranged so that it can move coaxially with respect to the upper mold part and a flow control element that is arranged concentrically inside the compaction plug, closing the upper mold part onto the lower mold part in order to form a mold cavity; introducing liquid metal through the duct within the mold cavity; moving the compaction plug upward, in order to obtain an accumulation of liquid metal within the mold cavity and in a chamber formed by the space freed by the upward movement of the compaction plug; closing the duct for feeding liquid metal by moving downward the flow control element and depressurizing the liquid metal supply hole, causing the return of the liquid metal within the duct; forging the liquid metal within the mold cavity by feeding downward the compaction plug.

## Description

The present invention relates to a method and an apparatus for molding objects made of aluminum, aluminum alloys, light alloys, brass and the like.

As is known, in the molding of objects made of aluminum or aluminum alloys there are problems due to the possibility of providing parts that do not have inclusions of porosities inside them and allow to achieve high mechanical characteristics and a considerable reduction of the process.

EP1687107 discloses an apparatus having a lower mold part and an upper mold part which delimit a region for the containment of a dosed quantity of liquid metal that arrives from a lower duct that is connected to a furnace. The upper mold part has a flow control element which acts on the port for connection to the duct for introducing the liquid metal and a compaction plug which forms a portion of the upper impression of the mold. The mold is then filled by overflow of the liquid metal. Such system has the drawback that the quantity of metal that is required to complete the part is not known exactly. Also, the dosage of the metal may not be correct, because in the initial step the mold is not filled completely, but the liquid metal reaches the level of the overflow line, achieving the complete filling of the mold only after the closure of the port for connection to the duct for introducing the liquid metal and the descent of the compaction plug which causes the liquid metal to rise in order to complete the mold cavity. Such system, which is valid in many respects, is susceptible of improvements especially as regards the type of mold filling.

US5562147 discloses a multi-stage casting plant and method of forming castings, wherein the movable upper portion of a mould is positioned in a first position. Molten metal is forced upwardly into the mould cavity through an opening in a stationary lower mould portion. The upper portion is lowered to a position below the first position to force molten metal into all regions of the mould cavity and to force excess metal back into the furnace. A stop is moved downwardly through an upper opening defined in the upper mould portion to close the lower opening. The upper portion is lowered to a second position, and an external downward force is applied on the upper portion to compress the metal within the mould.

EP2319638 discloses a method for producing a metal die casting component, comprises sucking a fluid metal required for die-casting component from a pressure-less metal melt supply by means of a metal melt pump, pumping over an inlet opening flowing into a mold cavity to a casting mold, and tightly sealing the inlet opening before subjecting the metal melt into the mold cavity during the solidification process.

The aim of the present invention is to provide a method and an apparatus for molding objects made of aluminum, aluminum alloy, light alloys, brass and the like in which mold filling is provided without overflow and without particular dosage of the liquid metal.

Within the scope of this aim, an object of the present invention is to provide a method and an apparatus that allow to obtain molded parts that are free from impurities of gas or air and have an exact shape.

Another object of the present invention is to provide a method and an apparatus for molding objects made of aluminum, aluminum alloy, light alloys, brass and the like that can be used also if a core made of sand or the like is inserted in the mold cavity.

A further object of the present invention is to provide a method and an apparatus that are highly reliable, relatively simple to provide and at competitive costs.

This aim, as well as these and other objects that will become better apparent hereinafter, are achieved by a method for molding objects made of aluminum, aluminum alloys, light alloys, brass and the like, characterized in that it comprises the steps of:
- starting from a molding apparatus which includes a lower platen adapted to support a lower mold part connected to a duct for feeding liquid metal, an upper platen at which an upper mold part is arranged, a compaction plug arranged so that it can move coaxially with respect to the upper mold part and a flow control element that is arranged concentrically inside the compaction plug, closing the upper mold part onto the lower mold part in order to form a mold cavity;
- introducing liquid metal through the duct within the mold cavity;
- moving the compaction plug upward, in order to obtain an accumulation of liquid metal within the mold cavity and in a chamber formed by the space freed by the upward movement of the compaction plug;
- closing the duct for feeding liquid metal by moving downward the flow control element and depressurizing the liquid metal supply hole, causing the return of the liquid metal within the duct;
- forging the liquid metal within the mold cavity by feeding downward the compaction plug.

Further characteristics and advantages of the invention will become better apparent from the description of a preferred but not exclusive embodiment of the method and of the apparatus according to the invention, illustrated by way of nonlimiting example in the accompanying drawings, wherein:
Figure 1 is a sectional view of the apparatus according to the invention, shown in the open mold configuration;
Figure 2 is a sectional view of the apparatus of Figure 1, shown in the closed mold configuration;
Figure 3 is a sectional view of the apparatus of Figures 1 and 2, shown in the step of feeding liquid metal;
Figure 4 is a sectional view of the apparatus of the preceding figures, shown in the condition in which the duct for feeding and depressurizing the liquid metal supply hole is closed;
Figure 5 is a sectional view of the apparatus according to the invention, shown in the step for forging the metal in the semisolid state in the mold cavity;
Figure 6 is a sectional view of the apparatus according to the invention, shown in the condition in which the mold is open and the molded part is extracted;

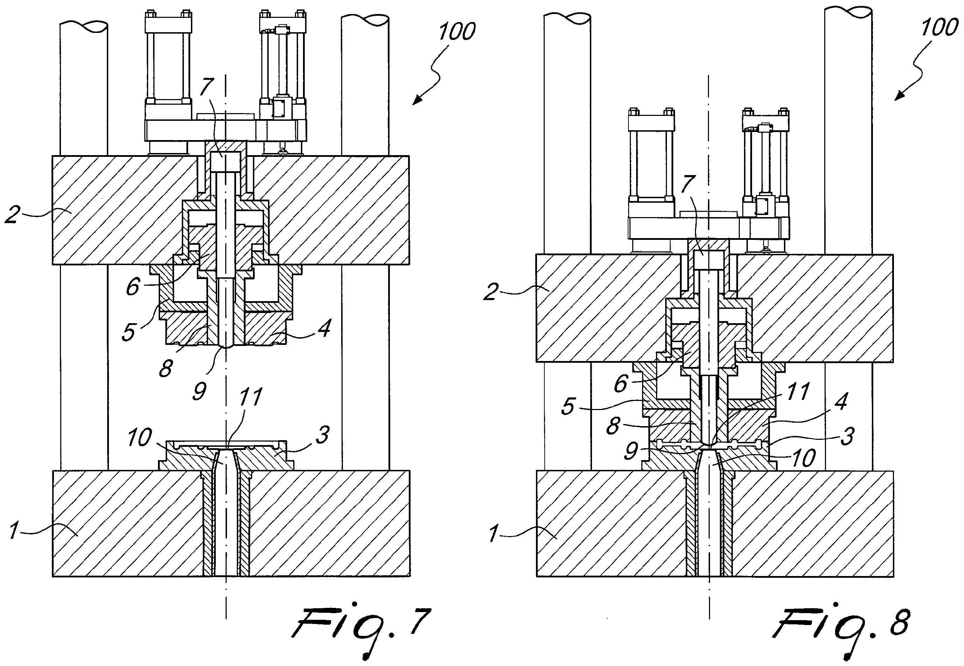

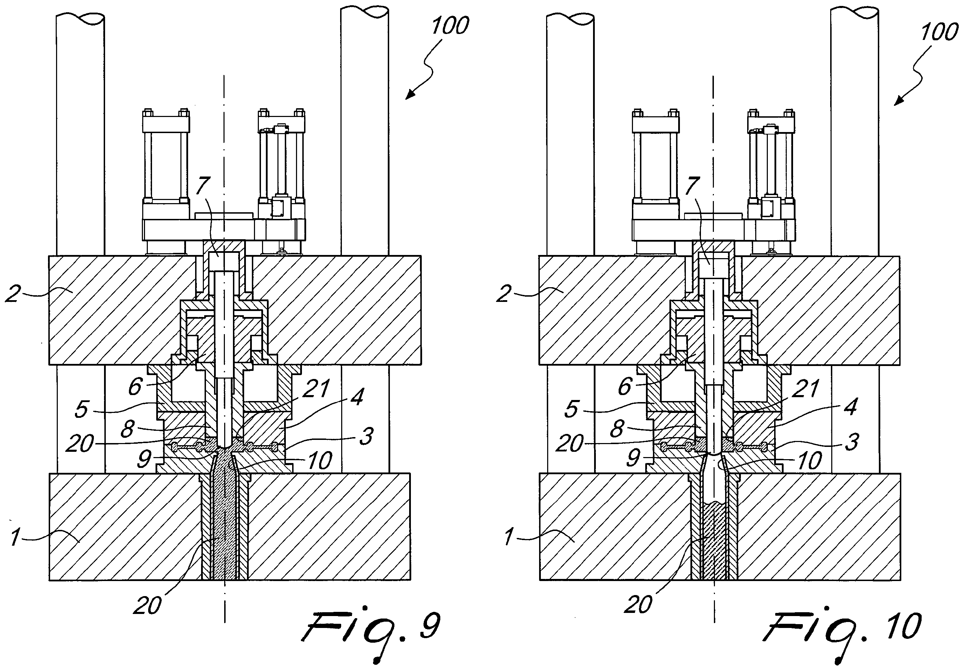

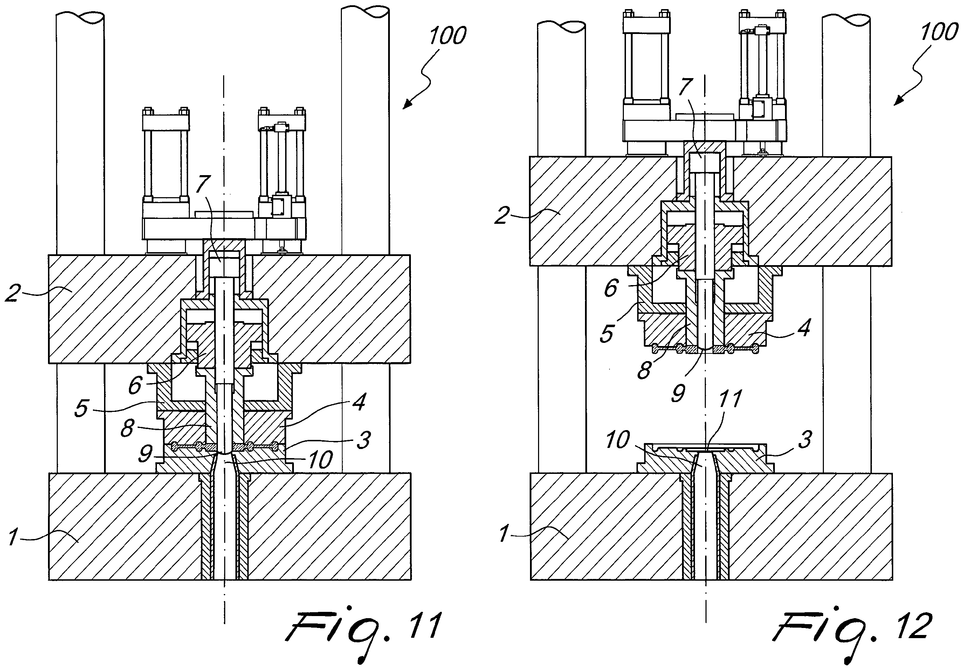

Figures 7 to 12 show a second embodiment of the apparatus according to the invention, in which the mold forms multiple impressions and the figures correspond respectively to Figures 1 to 6.

With reference to the figures, the apparatus according to the invention, generally designated by the reference numeral 100, has a lower platen 1 and an upper platen 2.

A lower mold part 3 is arranged on the lower platen 1 and forms one or more lower impressions.

At the lower mold part 3 there is a duct 10 for introducing liquid metal, which has a port 11 for connection to the region for the accumulation of pressing metal and the mold cavity.

The liquid metal arrives from below with a low pressure applied in a furnace which is arranged below the apparatus 100 and contains the molten metal. The metal then passes from the furnace through the duct 10 and enters the mold cavity.

The input duct 10 typically has ordinary heating means in order to keep the metal in the liquid phase.

At the upper platen 2 there is an upper mold part 4, which can be coupled to the lower mold part 3 in order to form the molded part and has one or more upper impressions that can be engaged in the corresponding lower impressions of a lower mold part 3.

The upper mold part 4, in its central portion, has a flow control element 9 that is controlled by a piston 7, which is concentric with respect to a compaction plug 8 that is in turn actuated by a piston 6.

At least one impression of the mold cavity is connected to a chamber 21 for the accumulation of liquid metal 20 in the compaction plug.

The upper mold part 4 is supported by a mold holder 5 which is connected to the upper platen 2.

The process for molding by means of the apparatus described above is as follows.

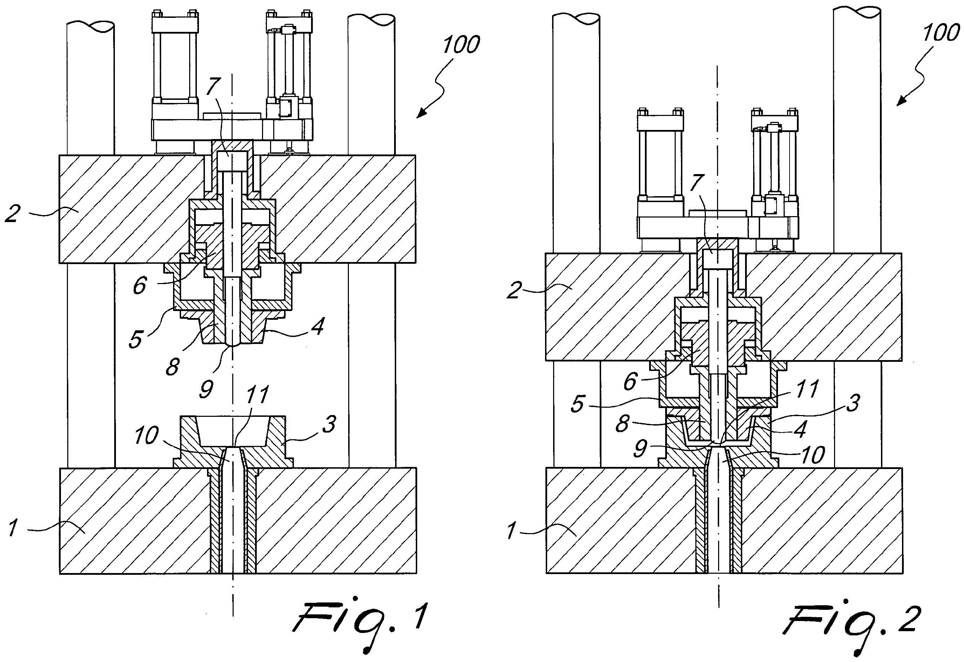

With reference to the figures, Figure 1 shows the condition in which the apparatus has the mold open.

In a subsequent step, shown in Figure 2, the upper mold part 4 moves to close against the lower mold part 3.

In this step, the liquid metal has not yet been introduced in the mold cavity.

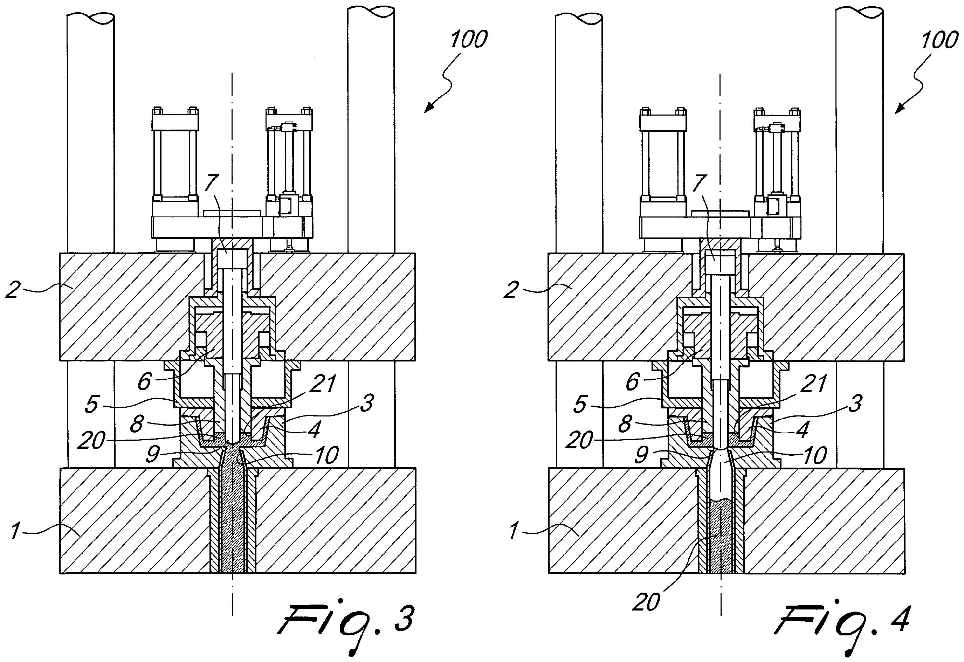

Figure 3 shows the third molding step of the method according to the invention, wherein the liquid metal is injected, through the duct 10 and the port 11, into the mold cavity formed by the lower mold part 3 and by the upper mold part 4, which were moved to close against each other in the preceding step.

The filling of the mold cavity by means of the liquid metal 20 occurs at low pressure, allowing the air/gas that is present in the mold cavity to exit through the air vents arranged in the coupling between the lower mold part 3 and the upper mold part 4.

During the step of filling with liquid metal, the compaction plug 8 is in a position of maximum downward stroke, flush with the lower cavity of the upper mold part 4.

During the filling of the mold cavity, the compaction plug, as seen in Figure 3, retracts by a programmable extent in order to allow to not have air/gas in the chamber for containing the liquid metal required for compaction during solidification.

The retraction of the compaction plug 8 allows an accumulation of liquid metal in the chamber 21 of the compaction plug 8, i.e., the space formed by the upward movement of the compaction plug 8, as indeed shown in Figure 3.

During the step of filling with liquid metal, in the mold cavity and in the metal accumulation chamber 21 of the compaction plug 8, the pressure of the liquid metal varies for example from 300 mbar to 2000 mbar, while in the compaction/solidification step the pressure in the mold cavity varies from 200 kg/cm² up to 1500 kg/cm².

When the compaction plug 8 is flush with the cavity of the upper mold part 4, as shown in Figure 1 and in Figure 2, the flow control element 9 is in the condition of maximum lifting, i.e., maximum upward stroke.

Figure 4 shows a step wherein the flow control element 9 moves to close the port 11 for opening the duct 10 and then pressure is immediately removed in the supply hole as shown, under the mold, the liquid metal that is in the duct descends again, while a dosed quantity of metal remains in the mold cavity and in the compaction chamber.

Conveniently, there is a sensor of the presence of liquid metal in order to raise the level of the metal within the mold cavity and the chamber of the compaction plug 8.

The temperature of the mold and the temperature of the metal are preset and the furnace is preset to a pressure value that varies as a function of the position of the liquid metal in the mold cavity.

Once closure of the intake duct 10 has occurred, the descent of the compaction plug 8 is actuated by the piston 6 at a variable pressure, for example from 300 kg/cm² up to 1500 kg/cm² and at a speed that can be programmed from 3 mm/s to 15 mm/s.

This operation in practice provides a forging of the material that is still in the semisolid state, transferring the liquid metal 20, that had accumulated in the chamber 21 of the compaction plug 8, to the mold cavity, through the connection between the chamber 21 and the mold cavity.

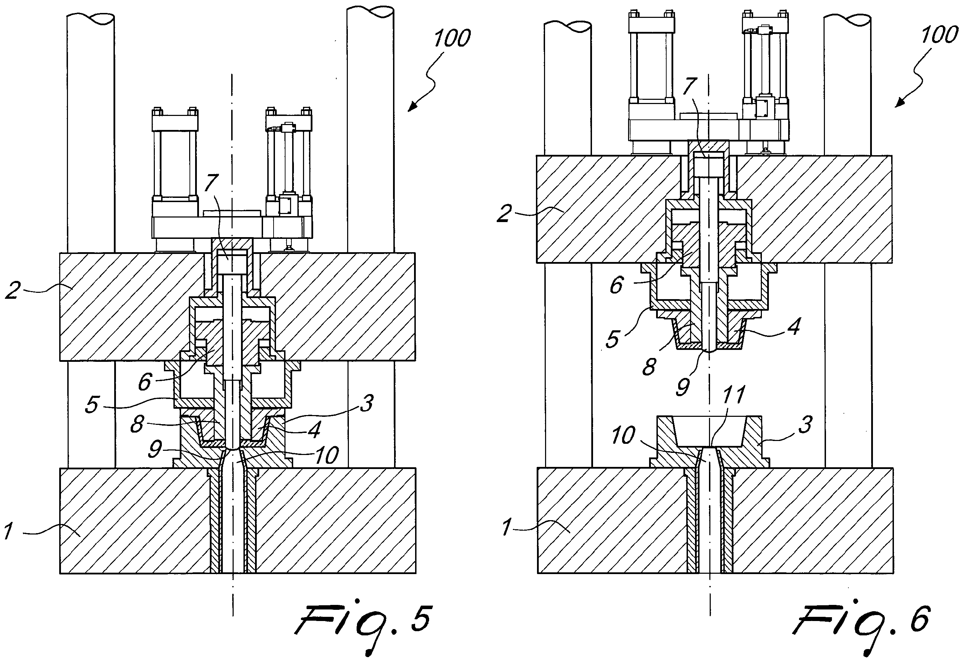

This step is shown in Figure 5, which shows the descent of the compaction plug 8, which presses directly the liquid metal 20 contained in the mold cavity.

Any oxides that are present in the liquid metal float, since they have a lower relative density than the metal, and with the retraction of the compaction plug described previously are drawn into the metal containment chamber, which is used for forging and therefore not in the mold cavity.

In practice it has been found that the method and the apparatus according to the invention achieve fully the intended aim and objects, since they allow to fill the mold without overflow and without having the need to adjust in a particular manner the dosage of the liquid metal.

Also, the material necessary for compaction during solidification is accumulated in the compaction plug with a special cycle.

The method and the apparatus according to the invention allow to produce parts that are free from impurities of gas or air and have an exact shape with a defined mold dose.

Also, the completed parts have high mechanical characteristics and solidify in a reduced time with respect to methods and apparatuses of the known type.

## Claims

1. A method for molding objects made of aluminum, aluminum alloys, light alloys, brass and the like, **characterized in that** it comprises the steps of:
- starting from a molding apparatus (100) which comprises a lower platen (1) adapted to support a lower mold part (3) connected to a duct (10) for feeding liquid metal (20), an upper platen (2) at which an upper mold part (4) is arranged, a compaction plug (8) arranged so that it can move coaxially with respect to said upper mold part (4) and a flow control element (9) that is arranged concentrically inside said compaction plug (8), closing said upper mold part (4) onto said lower mold part (3) in order to form a mold cavity;
- introducing liquid metal (20) through said duct (10) within said mold cavity;
- moving said compaction plug (8) upward, in order to obtain an accumulation of liquid metal within said mold cavity and in a chamber (21) formed by the space freed by the upward movement of said compaction plug;
- closing the duct (10) for feeding liquid metal (20) by moving downward said flow control element (9) and depressurizing the liquid metal supply duct (10), causing the return of said liquid metal (20) within said duct (10);
- forging said liquid metal within said mold cavity by feeding downward said compaction plug.

2. The method according to claim 1, **characterized in that** in the step in which said mold is open, said compaction plug (8) is in a position that is flush with said upper mold part (4).

3. The method according to claim 1 or 2, **characterized in that** said forging step is provided with said compaction plug (8) that acts directly on said liquid metal (20) contained in said mold cavity.

4. The method according to one or more of the preceding claims, **characterized in that** the forging step is performed on metal that is in a semisolid state, said forging step allowing the transfer of liquid metal (20) accumulated previously in the chamber (21) left free by said compaction plug (8) when said compaction plug (8) is moved upward, said chamber (21) being connected to said mold cavity.

5. The method according to one or more of the preceding claims, **characterized in that** said liquid metal (20) is fed at low pressure into said supply duct (10).

6. The method according to one or more of the preceding claims, **characterized in that** the step for moving upward said compaction plug (8) prior to the forging step allows to draw any oxides that are present in said liquid metal (20) into the chamber (21) defined by the upward movement of said compaction plug (8).

7. An apparatus for molding objects made of aluminum, aluminum alloys, light alloys, brass and the like, comprising a lower platen (1) that is adapted to support a lower mold part (3) into which a supply duct (10) of liquid metal (20) leads, an upper platen (2) at which there is an upper mold part (4) supported by a mold holder (5), **characterized in that** it comprises a compaction plug (8) that is arranged coaxially to said upper mold part (4), said compaction plug having, internally and concentrically to it, a flow control element (9) that is adapted to block an opening (11) of said supply duct (10) of liquid metal (20).

8. The apparatus according to claim 7, **characterized in that** said compaction plug (8) is moved by a piston (6) and said flow control element (9) is also moved by a corresponding piston (7).

9. The apparatus according to claim 7 or 8, **characterized in that** said compaction plug (8) can move from a position in which said compaction plug (8) is flush with said upper mold part (4) to a position in which said compaction plug (8) is moved upward with respect to said upper mold (4), in order to form a chamber (21) and a syringe effect and allow the accumulation of liquid metal in said chamber (21) formed by the upward movement of said compaction plug (8).

10. The apparatus according to one or more of claims 7 to 9, **characterized in that** said lower mold part (3) forms at least one impression and said upper mold part (4) forms likewise at least one impression.
